# EUROPEAN PATENT APPLICATION

(11) **EP 4 404 302 A2**
(43) Date of publication of application: **24.07.2024**
(21) Application number: 24150682.3
(22) Date of filing: 08.01.2024
(51) Int. Cl.: H01M 4/38, H01M 10/0562, H01M 10/42, H01M 10/44, H01M 4/02

(54) **REGENERATION METHOD OF ALL-SOLID-STATE BATTERY, AND ALL-SOLID-STATE BATTERY SYSTEM**

(30) Priority: 20.01.2023 JP 2023007166
(71) Applicant: TOYOTA JIDOSHA KABUSHIKI KAISHA, Toyota-shi, Aichi-ken, 471-8571 (JP)
(72) Inventor: OTAKI, Mitsutoshi, Toyota-shi, 471-8571 (JP); NAKANISHI, Shinji, Toyota-shi, 471-8571 (JP); WASEDA, Tetsuya, Toyota-shi, 471-8571 (JP); YOSHIDA, Jun, Toyota-shi, 471-8571 (JP); MIGITA, Tsubasa, Toyota-shi, 471-8571 (JP); UCHIDA, Yoshihiro, Toyota-shi, 471-8571 (JP)
(74) Representative: D Young & Co LLP

(57) **Abstract**

A regeneration method of an all-solid-state battery (50) includes a step of preparing an all-solid-state battery (50) having a cathode (52) that does not contain copper, and a step of executing overdischarge control of the all-solid-state battery (50). The overdischarge control is control of mitigating reaction variance that is variance in electrode reaction due to charging and discharging of the all-solid-state battery (50), by discharging the all-solid-state battery (50) until a potential of the cathode (52) becomes lower than an elution potential of copper.

## Description

### BACKGROUND OF THE INVENTION

### 1. Field of the Invention

The present disclosure relates to a regeneration method of an all-solid-state battery, and to an all-solid-state battery system.

### 2. Description of Related Art

Japanese Unexamined Patent Application Publication No. 2022-84373 (JP 2022-84373 A) discloses a regeneration method of a laminated battery having a bipolar structure. This regeneration method includes subjecting the laminated battery to a constant-current (CC) discharge process in which CC discharge is performed until total voltage reaches a lower limit voltage, and a constant-voltage (CV) discharge process in which CV discharge is performed while maintaining the lower limit voltage after the CC discharge process.

### SUMMARY OF THE INVENTION

Generally, in a secondary battery containing lithium ions (hereinafter also referred to as "Li ions"), variance in electrode reactions (desorption/insertion of Li ions) may occur during charging and discharging. Hereinafter, this variance will be referred to as "reaction variance". An all-solid-state battery does not contain an electrolytic solution with fluidity, but rather contains a solid-state electrolyte that does not have fluidity. Accordingly, in all-solid-state batteries, electrode reactions tend to be non-uniform (i.e., local electrode reactions tend to occur) as compared to lithium-ion batteries containing an electrolytic solution (so-called liquid batteries), and accordingly reaction variance readily occurs, and also such reaction variance that has occurred is not readily mitigated. Reaction variance may cause deterioration in the characteristics of all-solid-state batteries. Accordingly, it is desirable to appropriately mitigate reaction variance of all-solid-state batteries.

The present disclosure provides a regeneration method of an all-solid-state battery, and an all-solid-state battery system, that appropriately mitigate reaction variance of all-solid-state batteries.
(1) A regeneration method of an all-solid-state battery according to a first aspect of the present disclosure includes a step of preparing the all-solid-state battery including a cathode that does not contain copper, and a step of executing overdischarge control of the all-solid-state battery. The overdischarge control is control of mitigating reaction variance that is variance in electrode reaction due to charging and discharging of the all-solid-state battery, by discharging the all-solid-state battery until a potential of the cathode becomes lower than an elution potential of copper.
(2) In the regeneration method according to the above aspect, the overdischarge control may be control in which discharging of the all-solid-state battery is performed until elapsed time after the potential of the cathode becomes lower than the elution potential of copper exceeds a predetermined amount of time.
(3) In the regeneration method according to the above aspect, the overdischarge control may be control in which discharging of the all-solid-state battery is performed until the potential of the cathode reaches a predetermined potential that is lower than the elution potential of copper and higher than an elution potential of nickel.
(4) In the regeneration method according to the above aspect, the step of executing of the overdischarge control may include executing the overdischarge control at a time of recovery or replacement of the all-solid-state battery.
(5) In the regeneration method according to the above aspect, the step of executing of the overdischarge control may include executing the overdischarge control when standby time until a charging start time of the all-solid-state battery in timer charging of the all-solid-state battery is longer than a reference time.
(6) In the regeneration method according to the above aspect, the cathode may contain a cathode active material with a type-II silicon clathrate crystal phase.
(7) An all-solid-state battery system according to a second aspect of the present disclosure is an all-solid-state battery system that regenerates an all-solid-state battery including a cathode that does not contain copper, the all-solid-state battery system including a power conversion device that discharges the all-solid-state battery, and a control device that controls the power conversion device. The control device mitigates reaction variance that is variance in electrode reaction due to charging and discharging of the all-solid-state battery, by controlling the power conversion device to discharge the all-solid-state battery until a potential of the cathode becomes lower than an elution potential of copper.

According to the present disclosure, reaction variance of an all-solid-state battery can be mitigated as appropriate.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates an example of a configuration of a processing system of an all-solid-state battery according to an embodiment of the present disclosure;
FIG. 2 is a diagram schematically illustrating the configuration of the all-solid-state battery;
FIG. 3 is a flowchart showing a first example of processing procedures for overdischarge control according to the present embodiment; and
FIG. 4 is a flowchart showing a second example of processing procedures for overdischarge control according to the present embodiment.

### DETAILED DESCRIPTION OF EMBODIMENTS

### Description of Terms

In the embodiment of the present disclosure, elements presented in the singular also include the plural unless specifically stated otherwise. For example, "particle" can mean not only "one particle" but also "aggregate of particles (fine grains, powder, particle group)".

When a compound is represented by a stoichiometric composition formula, this stoichiometric composition formula is only a representative example of the compound. A compound may have a non-stoichiometric composition. For example, when lithium cobalt oxide is expressed as "LiCoO₂", the lithium cobalt oxide is not limited to a composition ratio of "Li/Co/O=1/1/2" unless otherwise specified, and may contain Li, Co and O in any compositional ratio. In addition, doping, substitution, and so forth, by trace elements, are also permissible.

Embodiments of the present disclosure will be described in detail below with reference to the drawings. Note that the same or corresponding portions are denoted by the same signs throughout the drawings, and description thereof will not be repeated.

### Embodiment

### System Configuration

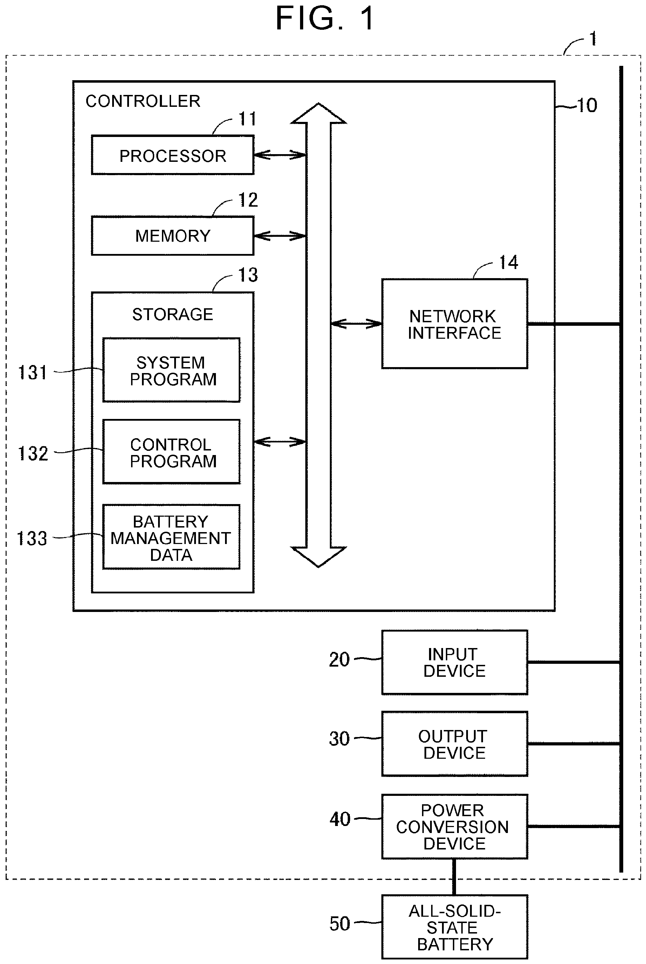

FIG. 1 illustrates an example of a configuration of a processing system of an all-solid-state battery according to an embodiment of the present disclosure. A processing system 1 for all-solid-state batteries is installed, for example, in a facility where used all-solid-state batteries are collected (all-solid-state battery reclaiming plant). The processing system 1 includes a controller 10, an input device 20, an output device 30, and a power conversion device 40. The components of processing system 1 are connected to each other by a communication bus.

The controller 10 executes processing for regenerating an all-solid-state battery 50 by controlling the power conversion device 40. The controller 10 includes a processor 11, memory 12, storage 13, and a network interface 14.

The processor 11 is a microprocessor such as, for example, a central processing unit (CPU), a micro-processing unit (MPU), or the like. The memory 12 is volatile memory such as random access memory (RAM). The storage 13 is rewritable nonvolatile memory such as a hard disk drive (HDD), a solid state drive (SSD), flash memory, or the like. The storage 13 stores a system program 131 including an operating system (OS), a control program 132 including computer-readable code necessary for control computation, and battery management data 133 storing various types of parameters (described later) for managing all-solid-state batteries. The processor 11 realizes various types of processing by reading the system program 131 and the control program 132 (described later), performing loading thereof to the memory 12, and performing execution thereof. The processor 11 also uses the battery management data 133 to manage the all-solid-state battery 50 that is an object of processing. The network interface 14 controls communications (such as exchanging control commands) between controller 10 and other devices in processing system 1.

Note that although FIG. 1 illustrates an example in which the controller 10 includes one processor 11, the controller 10 may include a plurality of processors. That is to say, the controller 10 includes one or more processors. The same applies to the memory 12 and the storage 13. The "processor" in the present specification is not limited to a processor in a narrow sense that executes processing by a stored program method, and may include hardwired circuitry such as an application specific integrated circuit (ASIC), a field-programmable gate array (FPGA), and so forth. Accordingly, the term "processor" may be replaced with processing circuitry regarding which processing is defined in advance by computer-readable code and/or hardwired circuitry.

The input device 20 is a switch, a keyboard, a mouse, or the like, which receives an input operations from an operator for performing control (described later) regarding the all-solid-state battery 50. The output device 30 is, for example, a display, and outputs various types of information (processing results and so forth) to the operator.

The power conversion device 40 is, for example, a direct current (DC)-to-DC converter or a DC-to-alternating current (AC) converter. The power conversion device 40 is connected between the all-solid-state battery 50 and an electrical load (omitted from illustration). The power conversion device 40 is configured to discharge electric power stored in the all-solid-state battery 50 to the electric load, in accordance with a control command from the controller 10.

Note that while in the example illustrated in FIG. 1, the all-solid-state battery 50 is not a component of the processing system 1 for all-solid-state batteries, the all-solid-state battery 50 may be a part of the processing system 1. Next, a configuration of the all-solid-state battery 50 will be described.

### All-Solid-State Battery

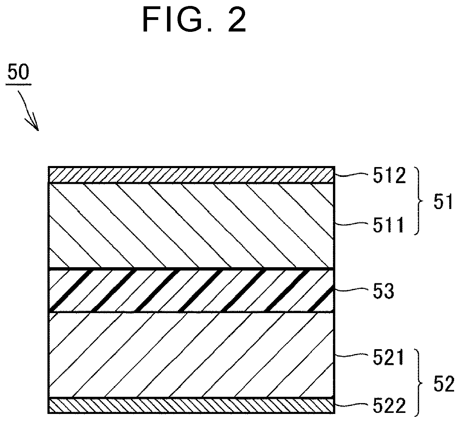

FIG. 2 is a diagram schematically illustrating the configuration of the all-solid-state battery 50. The all-solid-state battery 50 includes an anode 51, a cathode 52, and a solid-state electrolyte layer 53, as power storage elements. The all-solid-state battery 50 may include an outer encasement (omitted from illustration) for housing the power storage elements. The outer encasement is, for example, a pouch made of metal foil laminate film.

Note that the all-solid-state battery 50 may be a single cell, or a laminated battery. The laminated battery may be a monopolar laminated battery (parallel-connected laminated battery) or a bipolar laminated battery (series-connected laminated battery). The shape of the battery may be any of coin-like, laminate, cylindrical, or rectangular, for example.

### Anode

The anode 51 includes an anode active material layer 511 and an anode current collector 512. The anode active material layer 511 is formed by coating a surface of the anode current collector 512 with an anode slurry (slurry prepared by kneading material of the anode active material layer 511 and a solvent), and performing drying thereof. The anode active material layer 511 is in close contact with the solid-state electrolyte layer 53. A thickness of the anode active material layer 511 is, for example, 0.1 µm or more and 1000 µm or less.

The anode active material layer 511 contains an anode active material. The anode active material is, for example, an oxide active material. For example, Li₂S can also be used as the anode active material. The form of the anode active material may be, for example, particulate. The average particle size (D50) of the anode active material may be, for example, 10 nm or more, and may be 100 nm or more, although not limited thereto in particular. On the other hand, the average particle size (D50) of the anode active material may be, for example, 50 µm or less, and may be 20 µm or less.

The oxide active material may be, for example, LiCoO₂, LiMnO₂, LiNiO₂, LiVO₂, LiNi_{1/3}Co_{1/3}Mn_{1/3}O, and like layered rock-salt-type active materials, LiMn₂O₄, Li₄Ti₅O₁₂, Li(Ni_{0.5}Mn_{1.5})O₄ and like Spinel active materials, and LiFePO₄, LiMnPO₄, LiNiPO₄ LiCoPO₄, and like olivine active materials. A coating layer containing an Li-ion-conducting oxide may be formed on a surface of the oxide active material. This can suppress reaction between the oxide active material and the solid-state electrolyte (sulfide solid-state electrolyte in particular). An example of an Li-ion-conducting oxide is LiNbO₃. A thickness of the coating layer is, for example, 1 nm or more and 30 nm or less.

The anode active material layer 511 may further include at least one of a solid-state electrolyte, an electroconductive material, and a binder. Examples of the solid-state electrolyte include sulfide solid-state electrolytes, oxide solid-state electrolytes, nitride solid-state electrolytes, inorganic solid-state electrolytes (halide solid-state electrolytes and so forth), and organic polymer electrolytes (polymer electrolytes and so forth). Sulfide solid-state electrolytes may contain Li, X (in which X is at least one of P, As, Sb, Si, Ge, Sn, B, Al, Ga, and In), and S, for example. Sulfide solid-state electrolytes may further contain, for example, O, Si, and so forth. Sulfide solid-state electrolytes may further contain, for example, halogen (e.g., F, Cl, Br, I). Sulfide solid-state electrolytes may be, for example, a glass ceramics type or an argyrodite type. The sulfide solid-state electrolyte may include at least one selected from a group consisting of, for example, LiI-LiBr-Li₃PS₄, Li₂S-SiS₂, LiI-Li₂S-SiS₂, LiI-Li₂S-P₂S₅, LiI-Li₂O-Li₂S-P₂S₅, LiI-Li₂S-P₂O₅, LiI-Li₃PO₄-P₂S₅, Li₂S-P₂S₅, and Li₃PS₄.

Examples of electroconductive materials include carbon materials, metal particles, and electroconductive polymers. Examples of carbon materials include particulate carbon materials such as acetylene black (AB), Ketjen black (KB), and so forth, fibrous carbon materials such as carbon fibers, carbon nanotubes (CNT), carbon nanofibers (CNF), and so forth. Examples of binders include rubber-based binders and fluoride-based binders.

The anode current collector 512 may include, for example, aluminum (Al) foil or the like. The anode current collector 512 may have a thickness of, for example, 5 µm to 50 µm.

### Cathode

The cathode 52 includes a cathode active material layer 521 and a cathode current collector 522. The cathode active material layer 521 is formed by coating the surface of the cathode current collector 522 with a cathode slurry (slurry prepared by kneading the material of the cathode active material layer 521 and a solvent), and performing drying thereof. The cathode active material layer 521 is in close contact with the solid-state electrolyte layer 53. The thickness of the cathode active material layer 521 is, for example, 0.1 µm or more and 1000 µm or less.

The cathode active material layer 521 contains a cathode active material. The cathode active material may include, for example, at least one selected from a group consisting of graphite, Si, SiOₓ (0 < **x** < 2), and Li₄Ti₅O₁₂.

The cathode active material preferably has a crystal phase of type-II silicon clathrate. In the type-II silicon clathrate crystal phase, a plurality of silicon elements forms a polyhedron (cage) containing pentagons or hexagons. This polyhedron has spaces that can contain metal ions such as Li ions and the like. By inserting metal ions into this space, volumetric changes of the cathode 52 due to charging and discharging can be suppressed.

In general, all-solid-state batteries need to be imparted with a high confining pressure, in order to form good ion-conducting paths and electron-conducting paths, and also to suppress volumetric changes due to charging and discharging. Specifically, the confining pressure is, for example, 0.1 MPa or more, may be 1 MPa or more, and may be 5 MPa or more. On the other hand, the confining pressure is, for example, 100 MPa or less, may be 50 MPa or less, and may be 20 MPa or less. The confining pressure can be reduced by using a cathode active material that has a type-II silicon clathrate crystal phase.

The cathode active material (cathode active material particles) preferably has voids inside primary particles. In this void, a void volume A having a pore diameter of 100 nm or less may be greater than 0.15 cc/g and equal to or less than 0.25 cc/g. Alternatively, a void volume B having a pore diameter of 50 nm or less may be 0.10 cc/g or more and 0.17 cc/g or less. By the primary particles with the type-II silicon clathrate crystal phase having voids inside thereof, the voids also contribute to the suppression of volumetric changes, and accordingly the volumetric changes due to charging and discharging can be further suppressed. Also, when there are many minute voids with a pore diameter of 100 nm or less, or many minute voids with a pore diameter of 50 nm or less, the volumetric changes due to charging and discharging can be uniformly mitigated. Furthermore, the presence of many minute voids enables crushing of the voids by pressing to be suppressed.

The cathode active material layer 521 may further contain a solid-state electrolyte, an electroconductive material, and a binder. These materials are the same as the materials described in the anode section, and accordingly the description will not be repeated. The solid-state electrolytes may be of the same types among the anode active material layer 511 and the cathode active material layer 521, or may be of different types. The same is true for the electroconductive materials and the binders as well.

The cathode current collector 522 includes, for example, nickel (Ni) foil. On the other hand, the cathode current collector 522 does not contain copper (Cu) foil. The redox potential of copper is around 3.5 V, relative to the redox potential of lithium metal as a reference (vs. Li/Li⁺). The redox potential of nickel is lower than the redox potential of copper, and is around 2.8 V (vs. Li/Li⁺). Note that the material of the cathode current collector 522 is not limited to nickel, and may be other metals (such as stainless steel) having a redox potential lower than the redox potential of copper, or carbon (such as an electroconductive carbon sheet or the like). The cathode current collector 522 may have a thickness of, for example, 5 µm to 50 µm.

### Solid-state Electrolyte Layer

The solid-state electrolyte layer 53 is interposed between the anode 51 and the cathode 52. The solid-state electrolyte layer 53 separates the anode 51 from the cathode 52. A thickness of the solid-state electrolyte layer 53 is, for example, 0.1 µm or more and 1000 µm or less.

The solid-state electrolyte layer 53 contains a solid-state electrolyte. The solid-state electrolyte layer 53 may further contain a binder. These materials are the same as the materials described in the anode section, and accordingly the description will not be repeated. The solid-state electrolytes may be of the same types among the solid-state electrolyte layer 53 and the anode active material layer 511, or may be of different types. The solid-state electrolytes may be of the same types among the solid-state electrolyte layer 53 and the cathode active material layer 521, or may be of different types. The same is true for binders.

### Reaction Variance

In the all-solid-state battery 50, electrode reactions are more likely to be less uniform than in liquid-based batteries. More specifically, at the cathode 52, desorption reaction of Li ions occurs preferentially in a region near the solid-state electrolyte layer 53 that does not have fluidity, rather than in a region far from the solid-state electrolyte layer 53. Conversely, at the anode 51, insertion reaction of Li ions occurs preferentially in a region near the solid-state electrolyte layer 53 that does not have fluidity, rather than in a region far from the solid-state electrolyte layer 53. Accordingly, "reaction variance", which is variance in electrode reactions due to charging and discharging, readily occurs. In addition, the all-solid-state battery 50 does not contain an electrolytic solution having fluidity, and accordingly the reaction variance that occurs is not readily mitigated. Reaction variance may cause deterioration of the properties of the all-solid-state battery 50 (increase in internal resistance of the all-solid-state battery 50, and so forth). Accordingly, appropriate mitigation of reaction variance in the all-solid-state batteries 50 is desirable.

Thus, in the present embodiment, the controller 10 executes overdischarge control of the all-solid-state battery 50. Overdischarge control is control that mitigates reaction variance by discharging the all-solid-state battery 50 until the potential of the cathode 52 (cathode current collector 522) becomes lower than the elution potential of copper. In this example, the cathode current collector 522 contains Ni foil. When the potential of the cathode 52 reaches a potential that is lower than the elution potential of copper (but is a potential that is higher than the elution potential of nickel), the all-solid-state battery 50 is in a fully discharged state. Thus, according to the present embodiment, reaction variance occurring in the all-solid-state battery 50 can be appropriately mitigated.

### Processing Flow

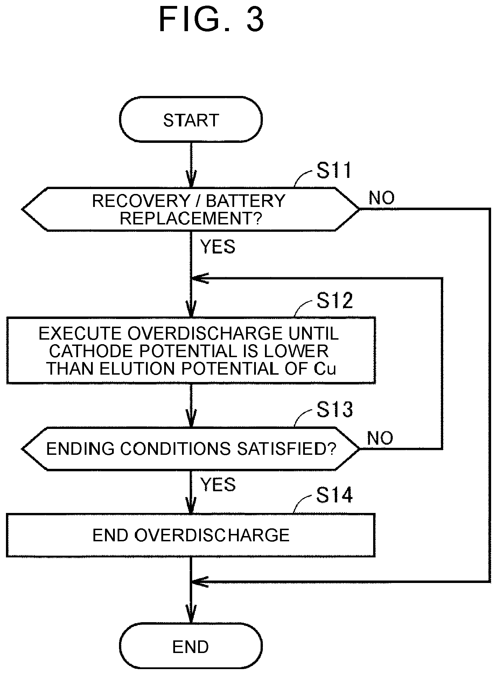

FIG. 3 is a flowchart showing a first example of processing procedures for overdischarge control according to the present embodiment. The processing shown in this flowchart is executed when a condition set in advance is satisfied (e.g., each cycle set in advance). Each of the steps is realized by software processing by the controller 10, but may be realized by hardware (electric circuitry) disposed in the controller 10. Hereinafter, the term "step" will be abbreviated to "S." Although omitted from illustration, a situation is assumed that the all-solid-state battery 50 is prepared by the operator and is electrically connected to the power conversion device 40.

In S11, the controller 10 determines whether the all-solid-state battery 50 is the object of recovery or battery replacement. As one example, the battery management data 133 records the type of the all-solid-state battery 50 (i.e., whether the all-solid-state battery 50 is the object of recovery/battery replacement, or otherwise), based on input operation by the operator. In this case, the controller 10 can refer to the battery management data 133 to determine whether the all-solid-state battery 50 is the object of recovery or battery replacement.

Note that while "recovery" of the all-solid-state battery includes a form in which the all-solid-state battery is used as a battery pack without alteration (reuse), this is not limiting, and a form may also be included in which the battery pack of the all-solid-state battery is disassembled into cells (or modules made up of a plurality of cells) and thereafter reconfigured from the cells into a battery pack again (rebuild). On the other hand, "recovery" of all-solid-state batteries does not include a form of disassembling battery packs down to the material level (material recycling).

When the all-solid-state battery 50 is the object of recovery or battery replacement (YES in S11), the controller 10 advances the processing to S12. On the other hand, when the all-solid-state battery 50 is not an object of performing recovery or battery replacement (NO in S11), the controller 10 ends the series of processing without executing subsequent processing.

In S12, the controller 10 starts overdischarge of the all-solid-state battery 50. The controller 10 may start overdischarge the all-solid-state battery 50, triggered by an operator performing an input operation at the input device 20.

More specifically, the controller 10 discharges the all-solid-state battery 50 until the potential of the cathode 52 (cathode current collector 522) becomes lower than the elution potential of copper. In other words, the controller 10 discharges the all-solid-state battery 50 until the redox potential of the cathode 52 becomes lower than the redox potential of copper (approximately 3.5 V relative to the redox potential of lithium metal as a reference).

Note that the potential of the cathode 52 (unipolar potential) can be estimated from the potential difference between the anode 51 and the cathode 52 (values detected by voltage sensor that is omitted from illustration) using a known technique. Alternatively, a detected value of the potential of the cathode 52, relative to the potential of a reference electrode (e.g., lithium metal electrode) as a reference, may be used.

On the other hand, when the cathode current collector 522 contains Ni foil as in the present embodiment, and the redox potential of the cathode 52 becomes lower than the redox potential of nickel (approximately 2.8 V relative to the redox potential of lithium metal as a reference), elution of nickel can occur. Accordingly, the controller 10 suppresses the redox potential of the cathode 52 from becoming lower than the redox potential of nickel. Although Ni foil has been described here as an example, this is merely exemplary, and with respect to other materials as well, the potentials corresponding to the relevant materials can be used similarly.

In S13, the controller 10 determines whether the conditions for ending the overdischarge of the all-solid-state battery 50 are satisfied. For example, the controller 10 determines that the conditions for ending overdischarge are satisfied when the elapsed time from when the potential of the cathode 52 becomes lower than the elution potential of copper exceeds a predetermined amount of time. The elapsed time in this case is the amount of time taken for the reaction variance of the all-solid-state battery 50 to be mitigated (more preferably resolved), and is experimentally determined in accordance with the specifications of the all-solid-state battery 50. The predetermined amount of time is recorded in the battery management data 133.

Alternatively, the controller 10 may determine that the overdischarge ending conditions are satisfied when the redox potential of the cathode current collector 522 approaches the redox potential of nickel, which is lower than the redox potential of copper. In other words, when the redox potential of the cathode current collector 522 reaches a predetermined potential with a margin as to the redox potential of nickel (potential higher than redox potential of nickel by a predetermined amount), the controller 10 may determine that the ending conditions of overdischarge are satisfied at this time. This predetermined potential is also experimentally determined in accordance with the specifications of the all-solid-state battery 50, and is recorded in the battery management data 133.

When the ending conditions are not satisfied (NO in S13), the controller 10 returns the processing to S12. Thus, overdischarge of the all-solid-state battery 50 continues. When the ending conditions are satisfied (YES in S13), the controller 10 advances the processing to S14 and ends the overdischarge of the all-solid-state battery 50.

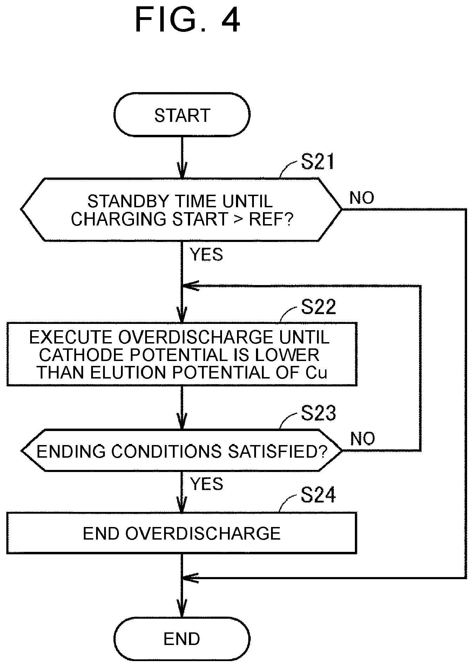

Although omitted from illustration, the processing system 1 of an all-solid-state battery may be installed in a vehicle, and the all-solid-state battery 50 may be a component of the processing system 1. In this case, processing such as shown in FIG. 4 may be executed instead of that in FIG. 3. In this example, a vehicle equipped with the processing system 1 of an all-solid-state battery is configured to start charging at a charging start time that is set in advance (so-called timer charging).

FIG. 4 is a flowchart showing a second example of processing procedures for overdischarge control according to the present embodiment. In S21, the controller 10 determines whether the standby time until the start time of timer charging is longer than a predetermined reference time REF. When overdischarge of the all-solid-state battery 50 is performed even though there is little time until the start time for timer charging, charging of the all-solid-state battery 50 may not be completed by the time specified by a user of the vehicle. The reference time REF is, for example, an amount of time during which overdischarge of the all-solid-state battery 50 can be performed and thereafter the all-solid-state battery 50 be charged to return to a state of charge (SOC) that is set in advance, by the timer charge start time. The reference time REF is determined experimentally in accordance with specifications of the power conversion device 40 (control upper limit of charging/discharging power and so forth), specifications of the all-solid-state battery 50 (magnitude of power that can be charged/discharged, cooling capacities of the all-solid-state battery 50, and so forth).

When the standby time until the start time of timer charging is longer than reference time REF (YES in S21), the controller 10 advances the processing to S22. On the other hand, when the standby time is less than or equal to the reference time REF (NO in S21), the controller 10 ends the series of processing. The subsequent processing of S22 to S24 is the same as the processing of S12 to S14 described with reference to FIG. 3, and accordingly description thereof will not be repeated.

As described above, in the present embodiment, overdischarge control of the all-solid-state battery 50 allows the all-solid-state battery 50 to discharge until the potential of the cathode 52 (cathode current collector 522) becomes lower than the elution potential of copper. Thus, the potential of the cathode 52 reaches a potential lower than the elution potential of copper, so that the all-solid-state battery 50 is sufficiently discharged. Thus, according to the present embodiment, reaction variance occurring in the all-solid-state battery can be appropriately mitigated.

The embodiment disclosed herein should be construed as illustrative in all respects and not restrictive. The scope of the present disclosure is set forth by the claims rather than by the above description of the embodiments, and is intended to include all modifications within the meaning and scope equivalent to those of the claims.

## Claims

1. A regeneration method of an all-solid-state battery (50), the regeneration method comprising:
a step of preparing the all-solid-state battery (50) including a cathode (52) that does not contain copper; and
a step of executing overdischarge control of the all-solid-state battery (50), wherein
the overdischarge control is control of mitigating reaction variance that is variance in electrode reaction due to charging and discharging of the all-solid-state battery (50), by discharging the all-solid-state battery (50) until a potential of the cathode (52) becomes lower than an elution potential of copper.

2. The regeneration method according to claim 1, wherein the overdischarge control is control in which discharging of the all-solid-state battery (50) is performed until elapsed time after the potential of the cathode (52) becomes lower than the elution potential of copper exceeds a predetermined amount of time.

3. The regeneration method according to claim 1, wherein the overdischarge control is control in which discharging of the all-solid-state battery is performed until the potential of the cathode (52) reaches a predetermined potential that is lower than the elution potential of copper and higher than an elution potential of nickel.

4. The regeneration method according to any one of claims 1 to 3, wherein the step of executing of the overdischarge control includes executing the overdischarge control at a time of recovery or replacement of the all-solid-state battery (50).

5. The regeneration method according to any one of claims 1 to 3, wherein the step of executing of the overdischarge control includes executing the overdischarge control when standby time until a charging start time of the all-solid-state battery (50) in timer charging of the all-solid-state battery (50) is longer than a reference time.

6. The regeneration method according to any one of claims 1 to 3, wherein the cathode (52) contains a cathode active material with a type-II silicon clathrate crystal phase.

7. An all-solid-state battery system (1) for regenerating an all-solid-state battery (50) including a cathode (52) that does not contain copper, the all-solid-state battery system (1) comprising:
a power conversion device (40) configured to discharge the all-solid-state battery (50); and
a control device (10) configured to control the power conversion device (40), wherein
the control device (10) is configured to mitigate reaction variance that is variance in electrode reaction due to charging and discharging of the all-solid-state battery (50), by controlling the power conversion device (40) to discharge the all-solid-state battery (50) until a potential of the cathode (52) becomes lower than an elution potential of copper.
